# EUROPÄISCHE PATENTSCHRIFT

(11) **EP 0 583 598 B1**
(45) Veröffentlichungstag und Bekanntmachung des Hinweises auf die Patenterteilung: **27.11.1996**
(21) Anmeldenummer: 93110999.5
(22) Anmeldetag: 09.07.1993
(51) Int. Cl.: H02G 9/06, F16L 5/02

(54) **Dichtelement für Kabelkanalrohre**
Sealing element for cable channel tubes
Elément d'étanchéité pour tuyaux de conduits de câbles

(30) Priorität: 05.08.1992 DE 4225916
(43) Veröffentlichungstag der Anmeldung: 23.02.1994
(73) Patentinhaber: THYSSEN POLYMER GMBH, 81671 München (DE)
(72) Erfinder: Bauer, Peter, D-94357 Konzell (DE); Helf, Walter, D-94315 Straubing (DE); Lorenz, Rudolf, D-94353 Haibach (DE)

(56) Entgegenhaltungen:
- DE-A- 3 740 582
- DE-A- 3 905 464
- DE-A- 4 005 842
- DE-B- 2 009 714
- DE-B- 2 641 682
- DE-C- 3 739 714

## Beschreibung

Die Erfindung bezieht sich auf ein in ein Kabelkanalrohr stirnseitig einsetzbares Dichtelement aus Kunststoff, gemäß Oberbegriff des Patentanspruches 1.

Solche Dichtelemente sind notwendig, um Kabelkanalrohre abzudichten, in denen Kabel zum Queren von Straßen unter der Fahrbahn verlegt werden. Dabei werden meist mehrere Kabel in einem Kabelkanalrohr untergebracht. Das zum Abdichten des Kabelkanalrohres notwendige Dichtelement hat dabei die Aufgabe, die Eintrittsöffnungen des bzw. der Kabel in das Rohr gegen Schwemmsand abzudichten, um das Einschlämmen der Kabel im Rohr unter der Fahrbahn und eine in damit verbundene Setzung des Erdreiches im Bereich der Eintrittsöffnungen zu vermeiden. Die Druckstufen der verwendeten Rohre können dabei unterschiedlich sein.

Gattungsgemäße Dichtelemente sind bereits bekannt geworden, so u.a aus der DE-40 16 062 A1, gem. der ein inneres, mittels einer Membran verschlossenes zylindrisches Rohr am Umfang dadurch abgedichtet ist, indem es in einen zweiten konisch ausgebildeten Rohrkörper gepreßt ist, während die Dichtwirkung gem. der DE-40 05 842 A1 durch eine in eine Dichtkammer eingebrachte viskose Dichtmasse erzielt wird, die ohne Zerstörung nicht entfernbar ist;

Der Erfindung liegt die Aufgabe zugrunde, gattungsgemäße Dichtelemente zu verbessern, sie frostsicher zu machen, in das Rohrinnere eingedrungenes Wasser wieder nach außen gelangen zu lassen und deren Herstellung sowie Handhabung auf Baustellen zu vereinfachen:

Diese Aufgabe wird bei einem gattungsgemäßen Dichtelement erfindungsgemäß durch die kennzeichnenden Merkmale des Anspruchs 1 gelöst.

Die mit der Erfindung erzielten Vorteile liegen insbesondere darin, daß auf der Baustelle ein einfach handzuhabendes Dichtelement zur Verfügung steht, welches den unterschiedlichen Gegebenheiten, d.h. Anzahl der Kabel mit verschiedenen Durchmessern, Kabelkanalrohre unterschiedlichen Durchmessers usw. ohne Aufwand anpassbar sind. Es wird dabei durch die Konizität des Gehäusemantels verhindert, daß bei Frost das Dichtelement nach außen gedrückt wird. Indem der Mantel geschlitzt ist kann das Gehäuse auf einfache Weise über das bzw. die Kabel gebogen werden. Die im Mantel in Richtung der Rohrachse vorgesehene Sollbruchstelle bringt den Vorteil, daß das Gehäuse unterschiedlichen Rohrinnendurchmessern anpassbar ist. Der am Bcden des Gehäuses vorgesehene innere Bund und das Gitter verhindern, daß die der Abdichtung dienende Platte aus offenporigem Schaumstoff in das Rohrinnere hineingedrückt wird. Durch die Verlegung der Trennstellen des Gitters in Ausschnitte des inneren Bundes ist auf vorteilhafte Weise verhindert, daß eine Beschädigung der Kabelmäntel durch Grate der Trennstelle mit Sicherheit verhindert ist. Ein weiterer Vorteil liegt in der Verwendung offenporigen Schaumstoffes für die Dichtplatte. Dadurch wird erreicht, daß in das Rohrinnere eingedrunges Wasser wieder nach außen sickern kann.

Ein Ausführungsbeispiel der Erfindung ist anhand der Abbildungen näher erläutert.

Es zeigt:
Fig. 1 Eine Explosionsdarstellung des Dichtelementes,
Fig. 2 eine Draufsicht auf den Boden des Gehäuses.

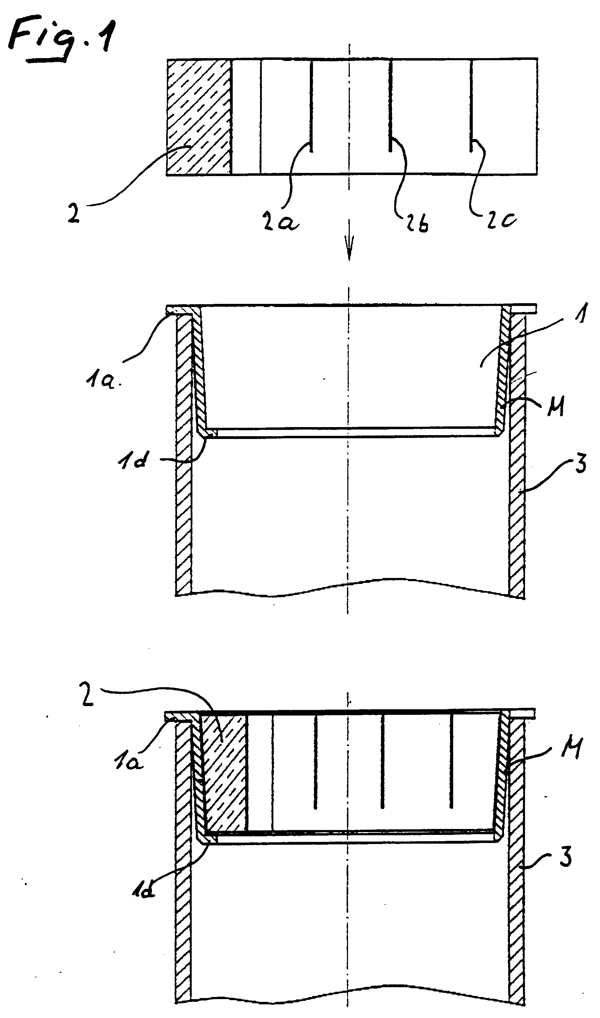

Die in Fig. 1 oben dargestellte Platte 2 aus offenporigen Schaumstoff weist Scheibenform auf und besteht aus dauerelastischem Material. Ihr Durchmesser ist wesentlich größer als der zugehörige Innendurchmesser des darunter dargestellten konischen Gehäuses 1 des Dichtelementes. Die Platte 2 weist austrennbare Ausstanzungen 2a,b,c zur Aufnahme von einem oder mehreren Kabeln auf. Diese Platte 2 wird von oben in das Gehäuse 1 eingesetzt und dabei verpreßt, so daß eine entsprechende Dichtwirkung erreicht wird.

Die Fig. 1 zeigt weiter im unteren Drittel das fertig montierte Dichtelement auf dem Kabelkanalrohr 3.

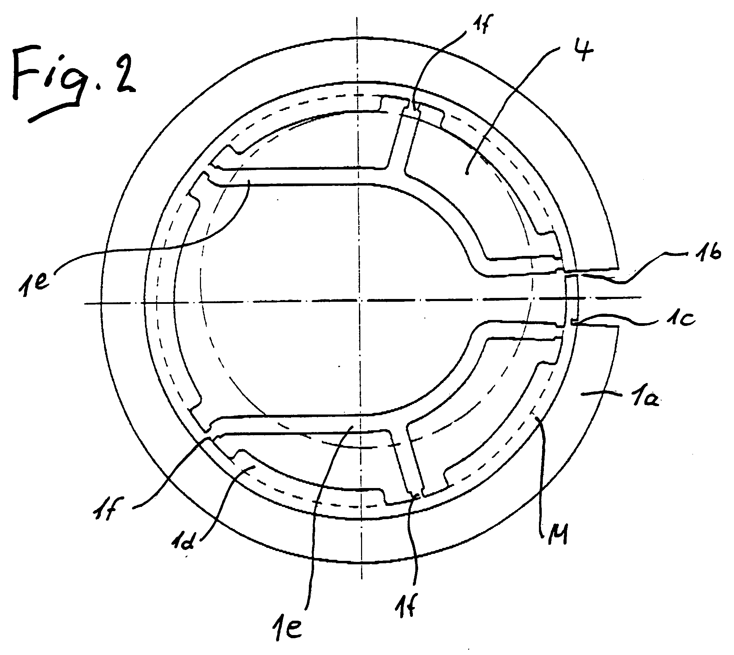

Wie aus Fig. 2 ersichtlich, weist das Gehäuse 1 einen äußeren Bund 1a auf, der gleichzeitig als Anschlag beim Einschieben in das Kabelkanalrohr 3 dient. Der Mantel M des Gehäuses 1 weist seitlich einen Schlitz 1b und eine Sollbruchstelle 1c auf. Damit das Gehäuse einerseits über die Kabel gebogen werden und für unterschiedliche Rohrinnendurchmesser angepaßt werden kann. Das Gehäuse 1 weist außerdem einen unteren Bund 1d als Anschlag für die Platte 2 auf. Der Boden des Gehäuses 1 besteht aus einem Gitter 1e, das, den Durchmessern der eingelegten Kabeln 4 entsprechend, entweder als Ganzes oder in Teilen verbleibt oder aber vollständig entfernbar ist. Dazu sind Trennstellen 1f am Mantel M vorgesehen, die in Aussparungen des inneren Bundes 1b vertieft angeordnet sind, damit evtl. vom Trennen her überstehende Materialreste die Kabelmäntel 4 nicht beschädigen.

## Patentansprüche

1. In ein Kabelkanalrohr stirnseitig einsetzbares Dichtelement aus Kunststoff mit einem von einem äußeren Bund aus zum Boden hin konisch ausgebildetes topfförmiges Gehäuse , **dadurch gekennzeichnet, daß** im Mantel (M) des topfförmigen Gehäuses ein Schlitz (1b) und eine seitliche Sollbruchstelle (1c) vorgesehen sind und am Boden des Gehäuses (1) ein Bund (1d) und ein unterschiedlichen Kabeldurchmessern anpassbares Gitter (1e) angeformt ist, daß das Gehäuse (1) zusammen mit einer darin eingesetzten scheibenförmigen Platte (2) aus offenporigem dauerelastischem Schaumstoff in das Kabelkanalrohr (3) bis zum Anschlag am Bund (1a) einsetzbar ist, daß die Platte (2) austrennbare Ausstanzungen (2a,b,c) als Durchführungen für mindestens ein Kabel (4) besitzt, und daß der Außendurchmesser der Platte (2) wesentlich größer ist als der Innendurchmesser des Gehäuses (1).

2. Dichtelement nach Anspruch 1, **dadurch gekennzeichnet**, daß das Gitter (1e) am Mantel (M) des Gehäuses (1) Sollbruchstellen (1f) aufweist, die in Aussparungen des Bundes (1d) vertieft angeordnet sind.

## Claims

1. Sealing element of plastic material insertable at the front side into a cable duct pipe having a pot-like housing of a conical design extending from an outside collar towards the bottom, **characterized in that** a slit (1b) and a lateral predetermined breaking point (1c) are provided in the jacket (M) of said pot-like housing and in that a collar (1d) and a grid (1e) adaptable to various cable diameters are shaped to the bottom of said housing (1), that said housing (1) together with a disk-shaped plate (2) of permanently elastic open-cell foamed material is insertable into said cable duct pipe (3) up to the stop on said collar (1a), that said plate (2) has separable punchings (2a, b, c) serving as leadthroughs for at least one cable (4), and that the outside diameter of said plate (2) is considerably larger than the inside diameter of said housing (1).

2. Sealing element according to claim 1, **characterized in that** said grid (1e) has predetermined breaking points (1f) on said jacket (M) of said housing (1) which are arranged in the depth of recesses of said collar (1d).

## Revendications

1. Elément d'étanchéité en matière plastique à insérer de façon frontale dans un tuyau de conduite de câbles avec un boîtier en forme de pot de forme conique entre un collet et le sol, **caractérisé en ce que** dans le corps (M) du boîtier en forme de pot une fente (1b) et un point latéral de rupture programmée (1c) sont prévus et qu'au fond du boîtier (1) sont formés un collet (1d) et une grille (le) pouvant être adaptée à des diamètres de câbles différents, que le boîtier (1) peut être inséré, en même temps qu'une plaque (2) en forme de disque en mousse à élasticité durable à pores ouverts qui y est insérée, dans le tuyau de conduite de câbles (3) jusqu'à la butée au collet (1a), que la plaque (2) possède des découpures à arracher (2a,b,c) comme passages pour au moins un câble (4) et que le diamètre extérieur de la plaque (2) est beaucoup plus grand que le diamètre intérieur du boîtier (1).

2. Elément d'étanchéité suivant la revendication 1, **caractérisé en ce que** la grille (le) présente sur le corps (M) du boîtier (1) des points de rupture programmée (1f) qui sont disposés en profondeur dans des évidements du collet (1d).
